# EUROPÄISCHE PATENTANMELDUNG

(11) **EP 1 109 015 A2**
(43) Veröffentlichungstag der Anmeldung: **20.06.2001**
(21) Anmeldenummer: 00125927.4
(22) Anmeldetag: 27.11.2000
(51) Int. Cl.: G01N 27/49

(54) **Elektrochemischer Detektor und diesbezügliches Auswertegerät**

(30) Priorität: 25.11.1999 DE 19956729
(71) Anmelder: Recipe Chemicals & Instruments GmbH, 80335 München (DE)
(72) Erfinder: Oswald, Josef, 80997 München (DE)
(74) Vertreter: Alber, Norbert, Dipl.-Ing.

(57) **Zusammenfassung**

Die Erfindung betrifft ein Auswertegerät für die Detektion von Substanzen, welches trotz einfachem Aufbau möglichst unverfälschte Meßergebnisse erbringt und die Veränderung bzw. Ergänzung von Meßprogrammen auch online ermöglicht. Ein erfindungsgemäßer elektrochemischer Detektor mit einer Trennsäule, die eine unterschiedliche Rückhaltewirkung bezüglich der einzelnen Substanzen entfaltet, einer Meßzelle, in der wenigstens eine Referenzelektrode und eine Arbeitselektrode von der Elektrolytlösung überströmt werden und einem elektrischen Auswertegerät, welches das Potential zwischen der Arbeitselektrode und der Referenzelektrode steuert sowie den durch die Arbeitselektrode fließenden Strom als Meßsignal weiterverarbeitet, kennzeichnet sich dadurch, daß das Auswertegerät eine analoge Meßschaltung zur Erzeugung des analogen Meßsignals, eine mehrstufige, analoge Filterschaltung zur Erzeugung eines analog gefilterten Meßsignals, wenigstens einen A/D-Wandler, eine digitale Auswerteschaltung und eine Anzeigeeinheit umfaßt.

## Beschreibung

### I. Anwendungsgebiet

Die Erfindung betrifft die elektrochemische Detektion von in Elektrolytlösungen enthaltenen Substanzen.

### II. Technischer Hintergrund

Eine solche Detektion wird beispielsweise in medizinischen Labors eingesetzt, um das Vorhandensein bzw. den Gehalt einer vorgegebenen Suchsubstanz, z. B. Adrenalin oder Serotonin, in einer vorliegenden Probe einer Körperflüssigkeit zu bestimmen. Das Verfahren ist beispielsweise unter dem Namen High Pressure Liquid Chromatography (HPLC) bekannt. Bei diesem Analyseverfahren wird die Suchsubstanz einer Trägerflüssigkeit, die von einer Pumpe geliefert wird, zugegeben und die so entstehende Elektrolytlösung über eine Trennsäule geleitet. Diese Trennsäule weist hinsichtlich der unterschiedlichen in der Lösung enthaltenen Suchsubstanzen auch eine jeweils unterschiedlich starke Rückhaltewirkung auf. Am Ausgang der Säule treten daher die einzelnen Substanzen zeitlich nacheinander auf und können somit einzeln analysiert werden.

Zu diesem Zweck wird hinter der Trennsäule die Elektrolytlösung durch eine Meßzelle geleitet, deren Durchlaßkammer so aufgebaut ist, daß die dort hindurchströmende Elektrolytlösung in Form einer Dünnschicht vorliegt.

In die Durchlaßkammer ragen wenigstens eine Referenzelektrode und eine Arbeitselektrode, meist zusätzlich auch eine Hilfselektrode hinein, die von der Elektrolytlösung überströmt werden.

Der Nachweis der Substanz in der Meßzelle geschieht dadurch, daß durch das zwischen Arbeitselektrode und Referenzelektrode anliegende Potential den Suchsubstanzen Elektronen zugeführt (Reduktion) oder von ihr Elektronen entnommen (Oxidation) werden.

Durch diesen Elektronenfluß (Elektrolyse) wird ein Strom an der Arbeitselektrode meßbar, der dem Gehalt der Suchsubstanz in der Probe direkt proportional ist. Voraussetzung dafür ist, daß das an der Arbeitselektrode gegenüber der Referenzelektrode angelegte Potential so gewählt wird, daß bezüglich der betreffenden Suchsubstanz auch eine Oxidation bzw. Reduktion stattfinden kann. Das an die Elektroden angeschlossene Auswertegerät muß daher zwei Zwecke erfüllen: zum Einen - abhängig von der zu detektierenden Substanz - ein bestimmtes Potential zwischen Arbeitselektrode und Referenzelektrode aufrechtzuerhalten und andererseits den an der Arbeitselektrode meßbaren, sehr geringen Strom (Größenordnung: 1 - 100 pA) als Meßsignal zu verarbeiten.

Derartige Auswertegeräte waren prinzipiell auch bisher schon verfügbar, allerdings meist in Analogtechnik ausgeführt.

Zwar existieren auch digitale Auswertegeräte, jedoch bestehen zu dem erfindungsgemäßen digitalen Auswertungsgerät erhebliche Unterschiede:

Zum einen besteht bei den bekannten Geräten der Digitalteil aus Einchip-Mikroprozessoren, jedoch nicht einem kompletten Motherboard eines PCs. Mithin sind zwar grundsätzlich alle Funktionen wie Arbeitsspeicher, Prozessor, Ein- und Ausgabeports vorhanden, jedoch ist die Verarbeitungsgeschwindigkeit sehr viel geringer und auch der Hauptspeicher bzw. Arbeitsspeicher bei Mikroprozessoren entsprechend weniger umfangreich.

### III. Darstellung der Erfindung

### a) Technische Aufgabe

Es ist die Aufgabe gemäß der Erfindung, ein Auswertegerät für die Detektion von Substanzen zu schaffen, welches trotz einfachem Aufbau möglichst unverfälschte Meßergebnisse erbringt und die Veränderung bzw. Ergänzung von Meßprogrammen auch online ermöglicht.

### b) Lösung der Aufgabe

Diese Aufgabe wird durch die kennzeichnenden Merkmale der Ansprüche 1 und 2 gelöst. Vorteilhafte Ausführungsformen ergeben sich aus den Unteransprüchen.

Durch Verwendung eines kompletten PC-Motherboards, insbesondere mit einem mindestens 386er-Prozessor und 1 MB Hauptspeicher besteht erstmals die Möglichkeit, die für unterschiedliche Suchsubstanzen benötigten Ablaufprogramme in der gewünschten Anzahl, konkret etwa 200 Meßprogramme, im Speicher dieses Mikroprozessors abzuspeichern, wobei noch zusätzlicher Speicher für neue hinzuzufügende Meßabläufe zur Verfügung steht.

Es besteht daher nicht mehr die Notwendigkeit, seltener benötigte Programme jeweils aktuell einzuspeichern und dann wieder aus dem Speicher zu entfernen, um Speicherplatz zu sparen.

Darüber hinaus wurde bei dem erfindungsgemäßen Gerät darauf geachtet, verschleißanfällige mechanische oder elektromechanische Bauteile vollständig zu vermeiden. Entsprechend sind die einzigen mechanischen Bauteile Folienschalter auf der Anzeigeeinheit. Elektromechanische oder mechanische Schalter, Drehregler etc. fehlen dagegen vollständig. Dadurch wird ein Gerät geschaffen, welches verschleißfrei arbeitet, und dennoch kostengünstig herzustellen ist.

Weiterhin unterscheidet sich das erfindungsgemäße Gerät vom Stand der Technik dadurch, daß der innere Aufbau in konkrete Schaltungsgruppen unterteilt ist, nämlich eine Meßschaltung, die das angelegte Potential konstant hält, und den gemessenen Strom in einer ersten Stufe verstärkt, einer nachgeordneten, insbesondere mehrstufigen analogen Filterschaltung auf der einen Seite sowie dem Digitalteil, bestehend aus der programmierten Logik (Pal) und dem PC-Motherboard auf der anderen Seite, die über analoge Digitalwandler funktionell verbunden sind, jedoch mittels Opto-Kopplem eine galvanische Trennung zwischen Analogteil und Digitalteil aufweisen, so daß keine Signalbeeinflussung durch Übertragung von Fremdströmen vom einen Teil in den anderen möglich ist.

Die Stromversorgungen sind für die einzelnen Schaltungsteile separat angeordnet und galvanisch getrennt, um keine gegenseitige Negativbeeinflussungen der Schaltungsgruppen zu bewirken.

Darüber hinaus sind trotz der digitalen Auslegung die Vorteile analoger Filter, insbesondere nach dem Tiefpaßverfahren, dadurch genutzt, daß die Signalfilterung noch auf der analogen Seite stattfindet, und erst das entsprechend verstärkte, und entsprechend um den Grundstrom kompensierte, Signal digitalisiert und weiterverarbeitet wird.

Des weiteren sind die programmierte Logik mit dem Motherboard als auch das Motherboard mit der Anzeigeeinheit über serielle Schnittstellen, konkret RS232-Schnittstellen, und die aus der PC-Technik bekannten Flachbandkabel miteinander verbunden. Auch der digitale Ausgang ist eine solche serielle Schnittstelle.

Damit ist auch das Anschließen eines externen PCs, Einspielen von Programmen aus einem solchen PC, sowie die komplette Steuerung des Auswertegerätes per PC oder gar per Intemet möglich.

Zusätzlich ist die Gestaltung der Anzeigeeinheit so ausgelegt, daß jeder Bildschirminhalt aufgrund ausführlicher Erklärungen selbsterklärend ist, was aufgrund der ausreichenden Darstellungsgröße (mindestens 8, insbesondere 16 Zeilen, und mindestens 20, insbesondere 40 Zeichen) des Displays möglich ist.

Funktionstasten sind dabei entlang der Höhe als auch der Breite des Displays angeordnet, so daß Auswahlmöglichkeiten, die in den entsprechenden Zeilen oder Spalten auf dem Display zu sehen sind, durch diese Funktionstasten ausgewählt werden können, ohne daß für den Benutzer Zuordnungsschwierigkeiten zwischen Taste und Funktion bestehen. Darüber hinaus weist die Anzeigeeinheit ausschließlich PC-typische Funktionstasten wie Pfeiltasten, Reset-Taste, Enter-Taste auf, entsprechend den Notwendigkeiten des verwendeten PC-Motherboards.

Die Grundstromkompensation wird dabei vorzugsweise iterativ, vorzugsweise mit parabolischer Funktion, durchgeführt, um eine exakte Nullpunkt-Annäherung zu erreichen.

Die analogen Filter sind so ausgelegt, daß Zeitkonstanten bis zu 50 Sek. bei den Messungen möglich sind. Eine weitere Besonderheit besteht darin, daß bei diesem Gerät die komplette Signalfilterung auf der analogen Seite stattfindet, während bei vergleichbaren Geräten die Filterung teilweise analog und teilweise digital stattfindet.

Eine bevorzugte Ausführungsform des Gerätes besteht in einer Bauform, bei der die Meßschaltung oder wenigstens ein Teil der Meßschaltung, nämlich die erste Verstärkung des Meßsignals und ggf. auch die Potential-Konstanthaltung aus dem Gehäuse des Geräts in das Gehäuse der Meßzelle verlagert sind, um Signalverluste auf der Signalstrecke zwischen Meßzelle und Auswertegerät zu vermeiden.

Weiterhin bietet das Gerät die Möglichkeit, das Meßverfahren gepulst zu betreiben, so daß Arbeitselektrode und Referenzelektrode immer nur kurzzeitig mit Potential beaufschlagt werden, und entsprechend auch nur kurzzeitig ein Strom an der Arbeitselektrode fließt. Dieses gepulste Meßverfahren kann zusätzlich als gepulstes integrierendes Meßverfahren programmgemäß durchgeführt werden, wobei die gemessenen kurzzeitigen Ströme aufsummiert werden, und wahlweise auch eine Gradientenkorrektur nachgeschaltet ist.

Ebenso ist programmgemäß die Umpolung der Elektroden möglich, was insbesondere zum Verringern der Verschmutzung an den Elektroden beziehungsweise zu deren Reinigung verwendet werden kann.

### c) Ausführungsbeispiele

Eine Ausführungsform gemäß der Erfindung ist im folgenden beispielhaft näher beschrieben. Es zeigen:
- Fig. 1:: ein Blockschaltbild des Auswertegerätes und
- Fig. 2:: die Anzeigeeinheit des Gerätes.

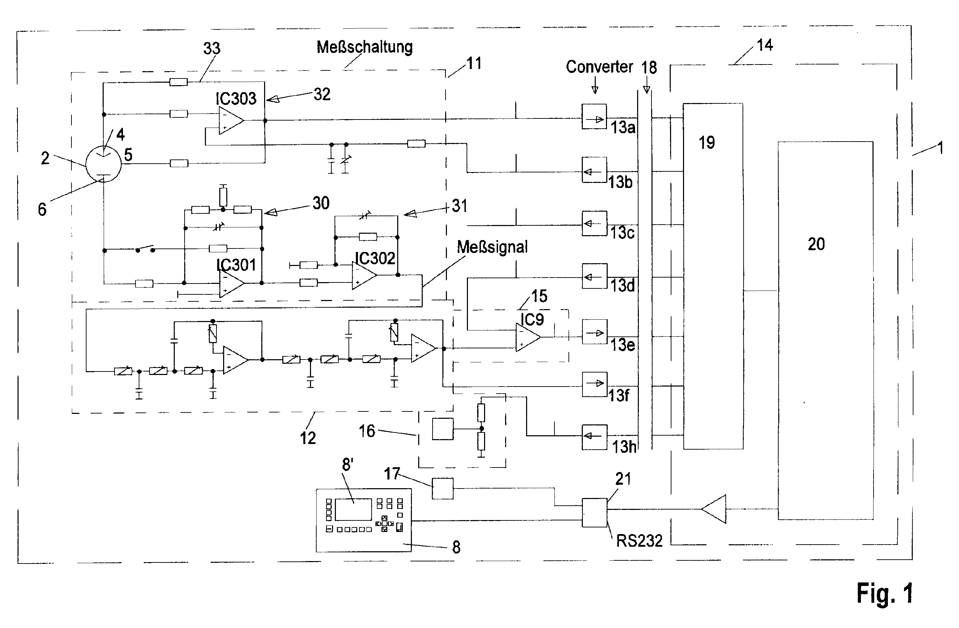

Fig. 1 zeigt den Schaltungsaufbau des Auswertegerätes: Der Meßschaltung 11 sind die Arbeitselektrode 6 und die Referenzelektrode 4, die sich innerhalb der Meßzelle 2 befinden, integriert, so daß durch diese Meßschaltung 11 das Potential zwischen diesen beiden Elektroden konstant gehalten werden kann und gleichzeitig der durch die Arbeitselektrode 6 fließende Strom gemessen und analog verstärkt werden kann.

Dieses so erhaltene analoge Meßsignal wird der mehrstufigen analogen Filterschaltung 12 zugeführt, und von dort über die Grundstromkompensation 15 über einen der A/D-Wandler 13, nämlich den Wandler 13e, dem Digitalteil 14 zugeführt. Sämtliche Verbindungen zwischen dem Analogteil und dem Digitalteil 14 sind über Opto-Koppler 18 geführt, die eine Signalverbindung, jedoch galvanische Trennung zwischen den beiden Teile bewirken.

Der Digitalteil besteht aus der programmierten Logik 19 und dem Motherboard 20, welches die üblichen Elemente, nämlich Prozessor, Arbeitsspeicher, Hauptspeicher usw. aufweist.

Der Ausgang des Motherboards 20 ist mit einer seriellen Schnittstelle 21 verbunden, welche ihrerseits sowohl mit der Anzeigeeinheit 8 als auch mit dem digitalen Ausgang 17, welcher wieder eine serielle Schnittstelle ist, verbunden ist. Zusätzlich existiert ein analoger Ausgang 16, der mit dem Digitalteil, insbesondere mit der Pal 19, wiederum über einen D/A-Wandler 13h und einen zwischengeschalteten Opto-Koppler verbunden ist.

Die Schaltungen sind im Detail wie folgt aufgebaut:

Die Meßschaltung 11 umfaßt einen l/U-Wandler 30 und eine Verstärkerschaltung 31, die an die Arbeitselektrode 6 der Meßzelle 2 gekoppelt sind. Der I/U-Wandler 30 wandelt den an der Arbeitselektrode 6 aufgenommenen Meßstrom in ein Spannungssignal um, das von dem nachgeschalteten Verstärker 31 mit geringem Verstärkungsfaktor verstärkt wird.

Die Meßschaltung 11 umfaßt ferner einen Potentiostaten 32, der dem Hilfseingang 5 der Meßzelle 2 eine möglichst konstante Spannung zuführt. Der Potentiostat 32 enthält einen Operationsverstärker IC 303, dessen invertierter Eingang mit der Referenzelektrode 4 der Meßzelle 2 verbunden ist und dessen nicht-invertierter Eingang an einem vorgegebenen Potential liegt, das Werte zwischen 0 V und 2 V annehmen kann. Die insbesondere bei einem Meßvorgang auftretenden Änderungen der Reaktionsspannung der Meßzelle 2 werden von der Referenzelektrode 4 erfasst und dem Verstärker IC 303 des Potentiostaten 32 als entsprechend geändertes Spannungssignal zuführt, so dass an der Hilfselektrode der Meßzelle 2 eine möglichst konstante Spannung anliegt.

Mit dem Ausgang des Verstärkers 31 ist ein zweistufiger Tiefpassfilter 12 verbunden, der in dem Meßsignal vorhandene Störkomponenten, die üblicherweise große Zeitkonstanten im Bereich zwischen 0,1 und 50 sek. aufweisen, filtert. Die beiden Filterstufen sind identisch aufgebaut.

Nachfolgend wird das Meßsignal mittels einer Verstärkerschaltung grundstromkompensiert. Das Meßsignal besteht im wesentlichen aus zwei Komponenten, dem Grundstrom aus der Meßzelle 2 und einem dem Grundstrom überlagerten Nutzsignal, aus dem sich Rückschlüsse über die getestete Flüssigkeit ziehen lassen, das jedoch um einen Faktor 100 kleiner als der Grundstrom sein kann.

Zur Extraktion des Nutzsignals aus dem Meßsignal ist ein Operationsverstärker IC 9 vorgesehen, der an seinem nicht-invertierten Eingang das Meßsignal erhält und an dessen invertiertem Eingang ein dem Grundstrom entsprechendes Spannungssignal anliegt. Vor Durchführung einer eigentlichen Messung wird die an dem invertierten Eingang des Operationsverstärkers IC 9 anliegende Spannung iterativ nach einer parabolischen Funktion an den dem Grundstrom entsprechenden Spannungswert angenähert, bis der an dem nicht-invertierten Eingang anliegende Spannungswert erreicht ist. Zu diesem Zweck wird das Ausgangssignal des mehrstufigen Analogfilters 12 der programmierbaren Logik 19 über einen A/D-Wandler 13f zugeführt. Daraufhin erzeugt die programmierbare Logik 19 sequentiell Ausgangswerte, die sich dem ermittelten Grundstromwert iterativ annähern und die dem invertierten Eingang des Operationsverstärkers IC 9 über einen DA-Wandler 13d zugeführt werden. Diese iterative Grundstromkompensation hat den Vorteil, dass weniger genau auflösende Wandler, insbesondere 16 Bit Wandler an stelle von 21 Bit Wandlern, eingesetzt werden müssen.

Das eigentliche Nutzsignal wird an einer Schnittstelle 21 (RS 232) in digitaler Form bereitgestellt. Für eine analoge Weiterverarbeitung ist ein analoger Ausgang 16 vorgesehen.

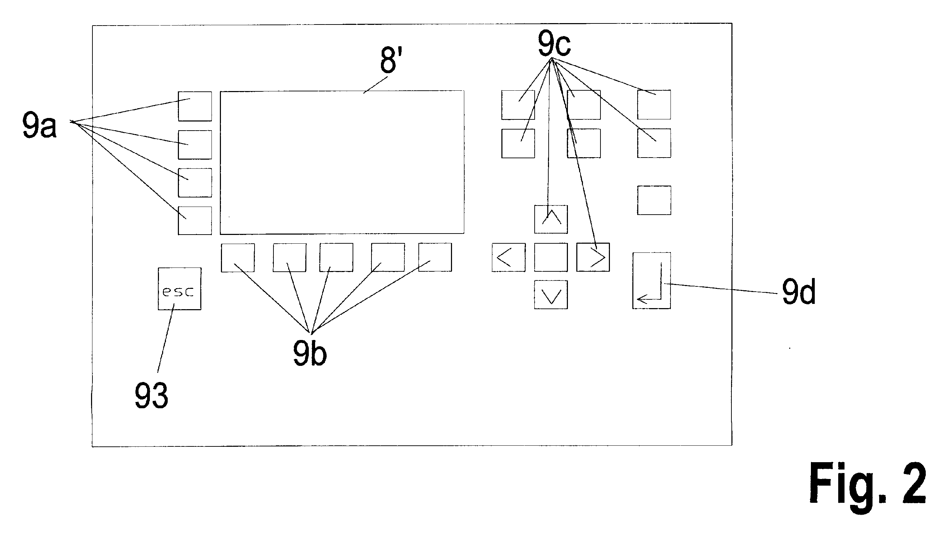

Die Anzeigeeinheit 8 umfaßt das Display 8' sowie mehrere Folientasten 9. Der konkrete Aufbau der Anzeigeeinheit ist in Fig. 2 dargestellt. Dabei sind die Folientasten zu unterscheiden hinsichtlich der Folientasten 9a bzw. 9b, die entlang der Höhe und entlang der Breite des Displays angeordnet sind, und den entsprechenden Zeilen- bzw. Spaltenbereichen des Displays 8' räumlich zugeordnet sind auf der einen Seite, und den keiner Position auf dem Display 8' zugeordneten anderen Tasten.

Dies sind die typischen PC-Funktionstasten, nämlich die Entertaste 9d, die Escapetaste 9e sowie weitere Funktionstasten 9c, beispielsweise Pfeilrichtungstasten, Ein-/Ausschalter etc. Diese sind auch räumlich vom Display gegenüber den Displaytasten 9a, 9b so getrennt, daß keine versehentliche Zuordnung zu den Anzeigen auf dem Display möglich ist.

### BEZUGSZEICHENLISTE

- 1: Auswertegerät
- 2: Meßzelle
- 4: Referenz-Elektrode
- 5: Hilfs-Elektrode
- 6: Arbeits-Elektrode
- 8: Anzeigeeinheit & Display
- 9: Folientasten
- 11: analoge Meßschaltung
- 12: analoge Filterschaltung
- 13a-h: A/D-Wandler bzw. D/A-Wandler
- 14: digitale Auswerteschaltung
- 15: Grundstrom-KompensationsSchaltung
- 16: analoger Ausgang
- 17: digitaler Ausgang
- 18: Opto-Koppler
- 19: Pal
- 20: PC-Motherboard
- 21: erste serielle Schnittstelle
- 30: I/U-Wandler
- 31: Verstärker
- 32: Potentiostat

## Patentansprüche

1. Elektrochemischer Detektor zur Detektion von in Elektrolytlösungen enthaltenen, unterschiedlichen Substanzen, mit
- einer Trennsäule, die eine unterschiedliche Rückhaltewirkung bezüglich der einzelnen Substanzen entfaltet,
- einer Meßzelle (2), in der wenigstens eine Referenzelektrode (4) und eine Arbeitselektrode (6) von der Elektrolytlösung überströmt werden und
- einem elektrischen Auswertegerät, welches das Potential zwischen der Arbeitselektrode (6) und der Referenzelektrode (4) steuert sowie den durch die Arbeitselektrode (6) fließenden Strom als Meßsignal weiterverarbeitet,
**dadurch gekennzeichnet, daß**
das Auswertegerät
- eine analoge Meßschaltung (11) zur Erzeugung des analogen Meßsignals,
- eine mehrstufige, analoge Filterschaltung zur Erzeugung eines analog gefilterten Meßsignals,
- wenigstens einen A/D-Wandler (13a, b...),
- eine digitale Auswerteschaltung (14) und
- eine Anzeigeeinheit (8)
umfaßt.

2. Elektrisches Auswertegerät für die elektrochemische Detektion von in Elektrolytlösungen enthaltenen, unterschiedlichen Substanzen und insbesondere die Konstanthaltung des zwischen einer Arbeitselektrode (6) und einer Referenzelektrode (4), die in einer Meßzelle (2) von der Elektrolytlösung überströmt werden, anliegenden Potentials sowie der Weiterverarbeitung als Meßsignal des durch die Arbeitselektrode (6) fließenden Stromes,
**dadurch gekennzeichnet, daß**
- eine analoge Meßschaltung (11) zur Erzeugung des analogen Meßsignals,
- eine mehrstufige, analoge Filterschaltung zur Erzeugung eines analog gefilterten Meßsignals,
- wenigstens ein A/D-Wandler (13a, b...),
- eine digitale Auswerteschaltung (14) und
- eine Anzeigeeinheit (8)
vorhanden ist.

3. Detektor bzw. Auswertegerät nach einem der vorhergehenden Ansprüche,
**dadurch gekennzeichnet, daß**
er eine wenigstens einstufige Signalverstärkung in der Meßschaltung (11) vor der Filterung dieses so verstärkten Signales umfaßt, insbesondere das Auswertegerät als mechanisch bewegliche Bauteile ausschließlich die Bedientasten, insbesondere Folientasten, der Anzeigeeinheit (8) besitzt, insbesondere die analoge Filterschaltung (12) eine Grundstrom-Kompensationsschaltung (15), insbesondere eine vor der A/D-Wandlung (13) angeordnete analoge Grundstromkompensationsschaltung (15), umfaßt.

4. Detektor bzw. Auswertegerät nach einem der vorhergehenden Ansprüche,
d**adurch gekennzeichnet, daß**
zwischen dem Analogteil, wenigstens umfassend die analoge Meßschaltung (11), die analoge Filterschaltung (12), die A/D-Wandler (13), und dem Digitalteil, wenigstens umfassend die digitale Auswerteschaltung (14), Opto-Koppler (18) angeordnet sind, so daß Analogteil und Digitalteil vollständig galvanisch voneinander getrennt sind.

5. Detektor bzw. Auswertegerät nach einem der vorhergehenden Ansprüche,
**dadurch gekennzeichnet, daß**
- die Auswerteschaltung (14) des Digitalteiles eine programmierbare Logik (Pal 19) umfaßt, die in Form eines Mikrochips die Logikschaltungen in softwareprogrammierbarer Form enthält, insbesondere
- die Auswerteschaltung (14) des Digitalteiles, insbesondere der Pal (19) nachgeschaltet, ein komplettes PC-Motherboard (20) umfaßt, in dessen Hauptspeicher die Programme für die einzelnen durchführbaren Meßprogramme softwaremäßig abgespeichert sind, insbesondere
- das PC-Motherboard (20) mit der Anzeigeeinheit (8) über eine erste serielle PC-Schnittstelle (21), insbesondere mittels der bekannten Flachbandkabel und -stecker, verbunden ist.

6. Detektor bzw. Auswertegerät nach einem der vorhergehenden Ansprüche,
**dadurch gekennzeichnet, daß**
die erste serielle PC-Schnittstelle (21) mit einem digitalen Ausgang (17) in Form ebenfalls einer seriellen PC-Schnittstelle, insbesondere wiederum mittels Flachbandkabeln, verbunden ist.

7. Detektor bzw. Auswertegerät nach einem der vorhergehenden Ansprüche,
**dadurch gekennzeichnet, daß**
das Auswertegerät einen zusätzlichen analogen Ausgang (16) aufweist.

8. Detektor bzw. Auswertegerät nach einem der vorhergehenden Ansprüche,
**dadurch gekennzeichnet, daß**
die Meßschaltung (11) räumlich direkt an oder in der Meßzelle (2) angeordnet ist.

9. Detektor bzw. Auswertegerät nach einem der vorhergehenden Ansprüche,
**dadurch gekennzeichnet, daß**
die Grundstromkompensation (15) iterativ mit parabolischer Annäherung zur Erzielung eines exakten Nullwertes ausgebildet ist.

10. Detektor bzw. Auswertegerät nach einem der vorhergehenden Ansprüche,
**dadurch gekennzeichnet, daß**
der Analogteil, der analoge Ausgang (16) und/oder der Digitalteil mit jeweils separaten Stromversorgungen ausgestattet sind, die zur Vermeidung von Fremdstromeinflüssen galvanisch voneinander getrennt sind.

11. Detektor bzw. Auswertegerät nach einem der vorhergehenden Ansprüche,
**dadurch gekennzeichnet, daß**
als Filterschaltung ausschließlich die analoge Filterschaltung (12) vorgesehen ist.

12. Detektor bzw. Auswertegerät nach einem der vorhergehenden Ansprüche,
**dadurch gekennzeichnet, daß**
die analoge Filterschaltung (12) mindestens Tiefpaßfilter dritter Ordnung und vorzugsweise sechster Ordnung aufweist.

13. Detektor bzw. Auswertegerät nach einem der vorhergehenden Ansprüche,
**dadurch gekennzeichnet, daß**
die möglichen Bildschirminhalte im Display (8') der Anzeigeeinheit jeweils selbsterklärend, insbesondere mittels erläuterndem Text, gehalten sind.

14. Detektor bzw. Auswertegerät nach einem der vorhergehenden Ansprüche,
**dadurch gekennzeichnet, daß**
- entlang sowohl der Höhe als auch der Breite des rechteckigen Displays (8') der Anzeigeeinheit (8) Folientasten (9a,b...) angeordnet sind, die entsprechenden Zeilen und Spalten auf dem Display (8') entsprechen und die dort angezeigten Funktionen bzw. Auswahlmöglichkeiten ansteuern, insbesondere
- das Display (8') mindestens acht, insbesondere mindestens sechzehn Zeilen in der Höhe und mindestens zwanzig, insbesondere mindestens vierzig, Zeichen in der Breite darstellen kann.

15. Detektor bzw. Auswertegerät nach einem der vorhergehenden Ansprüche,
**dadurch gekennzeichnet, daß**
das Detektionsverfahren jeweils als gepulstes, insbesondere als gepulstes integrierendes, Meßverfahren durchführbar ist.

16. Detektor bzw. Auswertegerät nach einem der vorhergehenden Ansprüche,
**dadurch gekennzeichnet, daß**
eine programmgemäße Umpolung der Elektroden von plus auf minus und umgekehrt durchführbar ist, insbesondere zur Reinigung der Elektroden.
